# EUROPÄISCHE PATENTSCHRIFT

(11) **EP 3 719 416 B1**
(45) Veröffentlichungstag und Bekanntmachung des Hinweises auf die Patenterteilung: **13.12.2023**
(21) Anmeldenummer: 20162002.8
(22) Anmeldetag: 10.03.2020
(51) Int. Cl.: F25B 30/02, F24D 3/18, F24F 3/06, F24H 4/00, F25B 39/04, F25B 25/00, F25B 30/06, F24F 5/00

(54) **VORRICHTUNG ZUR SICHEREN DURCHFÜHRUNG EINES LINKSDREHENDEN THERMODYNAMISCHEN CLAUSIUS-RANKINE-KREISPROZESSES MIT R290 ALS ARBEITSFLUID**
DEVICE FOR THE SAFE PERFORMANCE OF A LEFT-TURNING THERMODYNAMIC CLAUSIUS-RANKINE CYCLE WITH R290 AS THE WORKING FLUID
DISPOSITIF POUR LA MISE EN OEUVRE SÉCURISÉE D'UN CYCLE THERMODYNAMIQUE CLAUSIUS-RANKINE TOURNANT À GAUCHE AVEC R290 COMME FLUIDE DE TRAVAIL

(30) Priorität: 01.04.2019 DE 102019108367
(43) Veröffentlichungstag der Anmeldung: 07.10.2020
(73) Patentinhaber: Vaillant GmbH, 42859 Remscheid (DE)
(72) Erfinder: Hiegemann, Markus, 44791 Bochum (DE); Müssner, Matthias, 42499 Hückeswangen (DE); Forner, Pascal, 42857 Remscheid (DE); Raeck, Udo Paul, 50259 Pulheim (DE)
(74) Vertreter: Popp, Carsten

(56) Entgegenhaltungen:
- EP-A1- 3 312 531
- WO-A1-2008/094152
- WO-A1-2010/070842
- JP-A- 2012 137 290

## Beschreibung

Die Erfindung betrifft eine Vorrichtung zur sicheren Durchführung eines linksdrehenden thermodynamischen Clausius-Rankine-Kreisprozesses der mit R290 als Arbeitsfluid betrieben wird.

Insbesondere betrifft die Erfindung irreguläre Zustände in Kältekreisen, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014.

Es ist daher einerseits äußerst problematisch, die konstruktiven Prinzipien für Kältemittel-führende thermodynamische Prozesse zu übernehmen, die sich bei Sicherheitskältemitteln scheinbar gut bewährt haben, andererseits auf die Anlagenkonzepte aus der Zeit vor Einführung der Sicherheitskältemittel aufzusetzen. Dies liegt auch daran, dass inzwischen aus Einzelgeräten komplexe Anlagen geworden sind, was die Anzahl der Möglichkeiten für Störungen und deren Folgen vervielfältigt hat. Für in Gebäuden aufgestellte Anlagen ergeben sich zahlreiche Anforderungen an das Sicherheitskonzept, was erheblichen zusätzlichen Aufwand zur Folge hat. Nur in Ausnahmefällen, wie etwa bei manchen Luft/Wasser-Wärmepumpen sind Ausführungsformen bekannt geworden, die nicht in Wohngebäuden aufgestellt worden sind, obwohl sie ihre Wärme oder Kälte für Wohngebäude erzeugen.

Eine Anlage, die eine außen aufgestellte Wärmepumpe mit einem linksdrehenden thermodynamischen Kreisprozess zeigt, welche ein Wärmeträgerfluid im Kreislauf in ein Wohnhaus führt und ein anderes Wärmeträgerfluid im Kreislauf zu einer Wärmequelle, wird in der JPÜ 2000 283 597 A vorgestellt. Allerdings wird die Wärmepumpe nicht mit einem brennbaren Arbeitsfluid betrieben und es müssen daher auch keine Vorkehrungen getroffen werden, um zu verhindern, dass leckagebedingtes Austreten von Arbeitsfluid zu Kontamination der Wärmeträgerfluide oder zu einem explosiven Gemisch im außen aufgestellten Gehäuse führen könnte.

Die EP 3 312 531 A1 beschreibt eine Wärmepumpe, die mit einem entzündlichen Arbeitsfluid betrieben wird, und bei der eine Außeneinheit, die alle Arbeitsfluid enthaltenden Teile enthält, mit Luft als Wärmeträger durchströmt wird. Die Außeneinheit ist mit einem Wärmeträgerfluid mit einer Inneneinheit in einem Gebäude verbunden, wobei das Wärmeträgerfluid in der Außenbox erwärmt wird. Die WO 2010/070842 A1 beschreibt ebenfalls eine Wärmepumpe, die mit einem entzündlichen Arbeitsfluid betrieben wird, und bei der eine Außeneinheit, die alle Arbeitsfluid enthaltenden Teile enthält, mit Luft als Wärmeträger durchströmt wird. Die Außeneinheit ist mit einem Wärmeträgerfluid mit einer Inneneinheit in einem Gebäude verbunden, wobei die ebenfalls mit Luft durchströmt wird, um die Wäme in das Gebäude abzuführen.

Die Aufgabe der Erfindung ist daher, ausgehend vom bekannten Stand der Technik den erheblichen Aufwand für in Wohngebäuden aufgestellte Wärmepumpen einzusparen. Das Konzept soll auch für andere Anwendungen, die entsprechende Kreisprozesse durchführen, anwendbar sein, etwa für
- Haushaltskühlschränke,
- Haushaltsgefrierschränke,
- Haushaltstrockner,
- Haushaltskühl-Gefrierkombinationen,
- Kühlkammern für Hotel- und Gastronomie,
- Gefrierkammern für Hotel- und Gastronomie,
- Klimaanlage für Haus, Hotel- und Gastronomie,
- Warmwassererzeugung für Haus, Hotel- und Gastronomie,
- Beheizung für Haus, Hotel- und Gastronomie,
- Sauna-Schwimmbadanlagen für Haus, Hotel- und Gastronomie,
- Kombinierte Anlagen für die oben genannten Anwendungen,
wobei diese Aufzählung nicht vollständig ist.

Die Erfindung löst diese Aufgabe durch eine Vorrichtung zur sicheren Durchführung eines linksdrehenden thermodynamischen Clausius-Rankine-Kreisprozesses, der mit R290 als Arbeitsfluid betrieben wird, welches in einem geschlossenen, hermetisch dichten Arbeitsfluidumlauf geführt wird, aufweisend
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen und Leitungen für Sole als Wärmeüberträgerfluide
- ein Gebäude mit zwei Anschlüssen und Leitungen für Sole als Wärmeüberträgerfluide,
- ein geschlossenes Gehäuse,
   - welches alle am geschlossenen Arbeitsfluidumlauf angeschlossenen Einrichtungen umfasst und weitere Einrichtungen umfassen kann,
   - und das dergestalt geschlossen ist, dass weder Tiere noch Fremdkörper eindringen, noch Unbefugte es einfach öffnen können,
   - ferner schallgedämmt, aber nicht gasdicht ist und eine kleine Ausflussöffnung im unteren Bereich aufweist,
- wobei das Gehäuse außerhalb des Gebäudes aufgestellt ist,
- die zwei Leitungen für Sole als Wärmeübertragerfluide vom Gehäuse über einen Freiraum in das Gebäude geführt werden, und
- dass zwei Leitungen für Sole als Wärmeübertragerfluide aus dem Gehäuse oberhalb des Erdbodens aus dem Gehäuse zur Wärmequelle geführt werden,
- ein doppelwandiger Kondensator (3) vorgesehen wird, dessen Leckagespalt mit einem Entgaser (18) verbunden ist, und
- die Entlüftung des Entgasers (18) in das Gehäuse (6) erfolgt.

In Ausgestaltungen der Erfindung ist vorgesehen, dass als Wärmequelle ein Solekreislauf mit unterirdisch verlegten Leitungen oder ein Wasserkreislauf mit Grundwassernutzung und einem Zwischenwärmetauscher angeschlossen ist. Auch eine oberirdische Wärmequelle wie thermische Solarkollektoren auf einer Garage oder einem Aufdach sind als Wärmequellen anschließbar. Natürlich können auch alle Ausgestaltungen kombiniert zum Einsatz kommen.

Weitere Ausgestaltungen betreffen den Fall, dass aus einer Leckage entzündliches Arbeitsfluid austreten könnte. Hierbei ist zu verhindern, dass sich ausgetretenes Arbeitsfluid ansammeln oder in Senken fließen kann. Hierfür kann vorgesehen werden, dass das Gehäuse aufgeständert ist und sich nicht in der Nähe von Bodensenken befindet. Weiterhin kann aus der erfindungsgemäßen Ausflussöffnung im unteren Bereich des Gehäuses aus dem Gehäuse absinkendes Arbeitsfluid aus dem Gehäuse ausfließen.

Da der Arbeitsfluidumlauf typischerweise unter einem höheren Druck als der Wärmeträgerfluidumlauf steht, würden Leckagen im Verdampfer oder im Kondensator bewirken, dass Arbeitsfluid in den Wärmeträger einperlt und, sofern nicht löslich, eine Gasphase ausbildet. Diese Gasphase wird mit einem erfindungsgemäßen Entgaser entfernt, wobei die finale Entgasung ins Freie erfolgt, weil dann wegen der starken Verdünnung mit Luft keine Entzündungsgefahr auftritt. Allerdings besteht bei direkter Entgasung ins Freie bei starkem Frost die Gefahr der Vereisung und man bräuchte eine Begleitheizung. Besser ist es daher, wie im Rahmen der Erfindung vorgesehen, den Entgaser ebenfalls im Gehäuse anzuordnen.

Daher wird ein Doppelwand-Wärmetauscher als Kondensator eingesetzt. Die einzelnen Platten sind dabei aus zwei extrem dünnen Platten zusammengesetzt und bilden somit eine schmale sichernde Leckagespalte. Diese ist im Normalfall drucklos, während sowohl das Arbeitsfluid als auch das Wärmeträgerfluid jeweils unter Druck stehen. Im Defektfall, z.B. bei einem Plattenriss oder bei Korrosion, wird gewährleistet, dass das Arbeitsfluid oder das Wärmeträgerfluid, je nachdem wo die Leckage auftritt, sichtbar nach außen geleitet wird, ohne dass es zu einer Vermischung kommen kann. Entweichendes gasförmiges Arbeitsfluid wird dann ebenfalls zwangsweise in das Gehäuse abgeführt und von dort fortgelüftet.

Die Erfindung wird nachfolgend anhand von drei Prinzipskizzen näher erläutert. Hierbei zeigen:
- Fig. 1: eine erste Ausführungsvariante für eine außen aufgestellte Sole/Wasser-Wärmepumpe
- Fig. 2: eine zweite Ausführungsvariante für eine außen aufgestellte Sole/Wasser-Wärmepumpe
- Fig. 3: eine dritte Ausführungsvariante für eine außen aufgestellte Wasser/Wasser-Wärmepumpe.

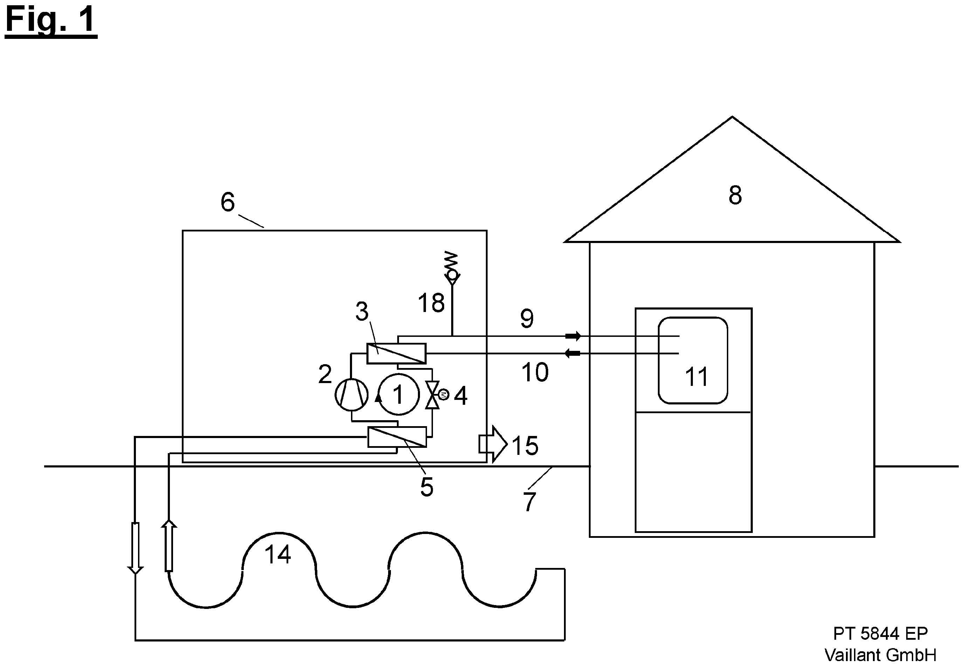

Fig.1 zeigt eine erste Ausführungsvariante für eine außen aufgestellte Wärmepumpe anhand einer Prinzipskizze. Hierbei ist dargestellt ein Kältekreis 1 mit einem Verdichter 2, einem Kondensator 3, einer Druckreduzierung 4 und einem Verdampfer 5 in einem Gehäuse 6, welche zusammen die Wärmepumpe bilden. Das gesamte Gehäuse 6 ist dabei oberhalb des Erdbodens 7 außerhalb eines Gebäudes 8 aufgestellt. Der Wärmesenken-Vorlauf 9 und der Wärmesenken-Anschluss 10 werden oberseitig aus dem Gehäuse 6 herausgeführt und in das Gebäude 8 geleitet, wo sie an das Heizungs- und Warmwassergerät 11 angeschlossen sind. Die Leitungsführung ist dabei beliebig, die Leitungen müssen jedoch gut isoliert werden.

Neben dem Gehäuse 6 erfolgt der Anschluss an die Wärmequelle. Das Gehäuse verfügt hierzu über einen Wärmequellen-Anschluss 12 und einen Wärmequellen-Vorlauf 13. Als Wärmequelle dient Sole, die in einem Solekreislauf 14 in Leitungen, die typischerweise im Erdreich verlegt sind, zirkuliert.

Das Gehäuse 6 ist dabei geschlossen, so dass weder Tiere noch Fremdkörper eindringen, noch Unbefugte es einfach öffnen können. Außerdem ist es schallgedämmt, dabei aber nicht gasdicht. Durch eine gute Durchlüftung sowie eine kleine Ausflussöffnung 15 im unteren Bereich des Gehäuses 6 wird sichergestellt, dass sich im Inneren des Gehäuses 6 auch im Fall von Leckagen im Kälteprozess 1 kein entzündliches Gemisch aus Luft mit entzündlichem Arbeitsfluid bilden kann.

In der Leitung des Wärmesenken-Vorlaufs 9, in der das erwärmte Wärmeträgerfluid zum Heizungs- und Warmwassergerät 11 geführt wird, ist ein Entgaser 18 vorgesehen, der im Leckagefall einperlendes Arbeitsfluid aus dem Kondensator 3 aus dem Wärmeträgerfluid entfernt und ins Gehäuse 6 abführt. Zum Schutz gegen Leckagen ist der Kondensator 3 doppelwandig ausgeführt.

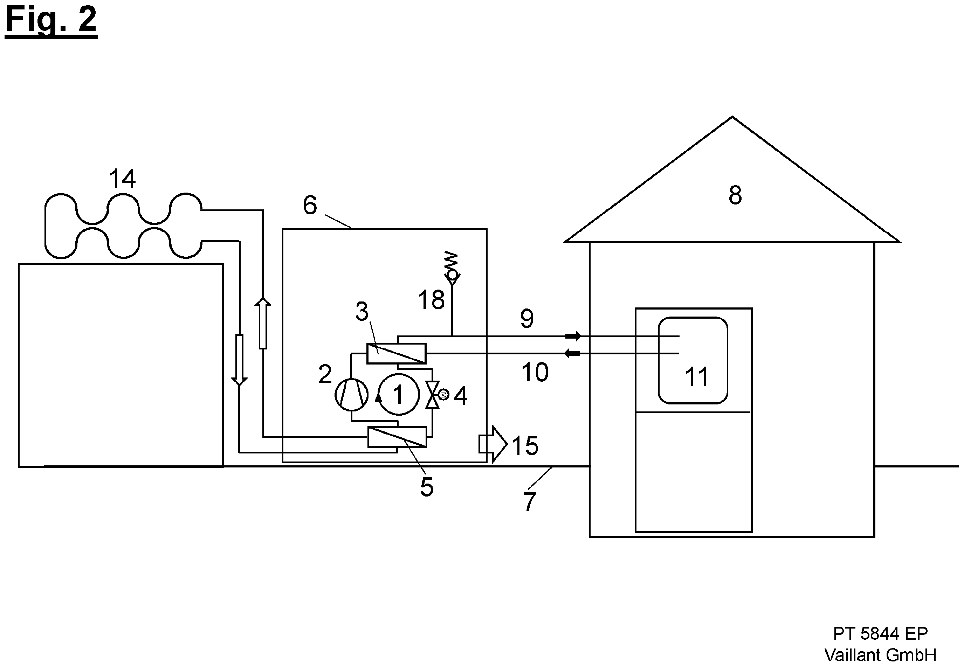

Fig. 2 zeigt eine zweite Ausführungsvariante für eine außen aufgestellte Sole/Wasser-Wärmepumpe, die sich von der Sole/Wasser-Wärmepumpe in Fig. 1 nur die oberirdische Anordnung der Wärmequellen-Leitungen 14, hier angedeutet auf einem Garagendach, unterscheidet.

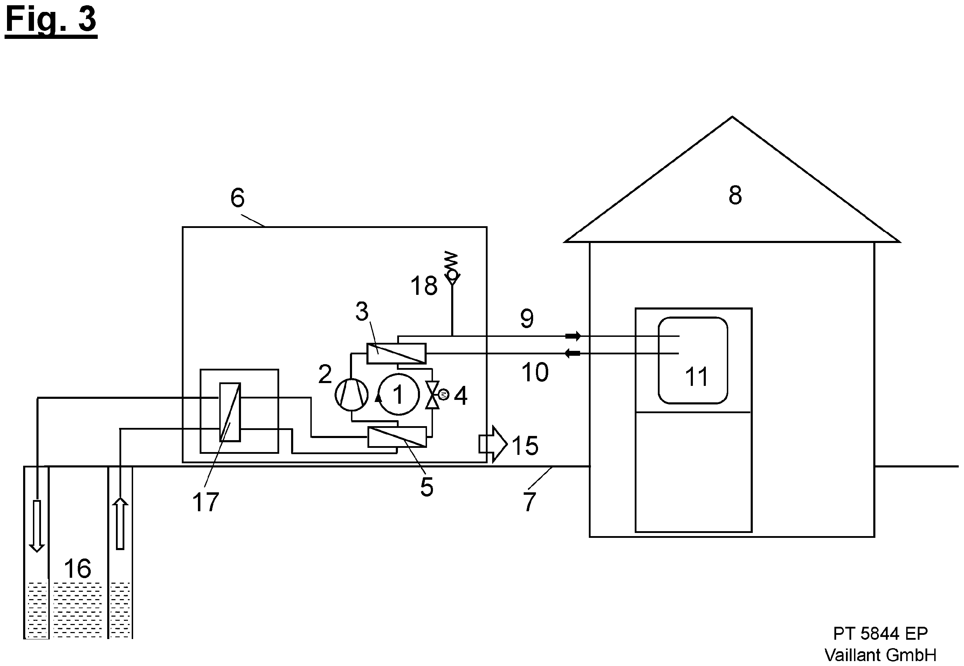

Fig. 3 zeigt eine dritte Ausführungsvariante für eine außen aufgestellte Wasser/Wasser-Wärmepumpe, die sich von der Sole/Wasser-Wärmepumpe in Fig. 1 nur durch einen Zwischenwärmetauscher 16 im Gehäuse 6 unterscheidet, der das zirkulierende Grundwasser 16 vom Kältekreis 1 trennt. Bei der Nutzung von Grundwasser als besonders effiziente Wärmequelle müssen Grundwasserinhaltsstoffe vom Verdampfer der Wärmepumpe ferngehalten werden, daher wird ein Zwischenwärmetauscher 17 benötigt.

Selbstverständlich können alle drei Wärmequellen auch miteinander kombiniert werden, solange die resultierende Ausführungsform alle Merkmale des anhängenden unabhängigen Anspruchs 1 beinhaltet, und auch eine Umkehrung des Kälteprozesses zur Erzeugung von Klimakälte anstatt von Wärme ist möglich.

### Bezugszeichenliste

- 1: Kältekreis
- 2: Verdichter
- 3: Kondensator
- 4: Druckreduzierung
- 5: Verdampfer
- 6: Gehäuse
- 7: Erdboden
- 8: Gebäude
- 9: Wärmesenken-Vorlauf
- 10: Wärmesenken-Anschluss
- 11: Heizungs- und Warmwassergerät
- 12: Wärmequellen-Anschluss
- 13: Wärmequellen-Vorlauf
- 14: Solekreislauf
- 15: Ausflussöffnung
- 16: Grundwasser
- 17: Zwischenwärmetauscher
- 18: Entgaser

## Patentansprüche

1. Vorrichtung zur sicheren Durchführung eines linksdrehenden thermodynamischen Clausius-Rankine-Kreisprozesses (1) der mit R290 als Arbeitsfluid betrieben wird welches in einem geschlossenen, hermetisch dichten Arbeitsfluidumlauf geführt wird, aufweisend
- mindestens einen Verdichter (2) für Arbeitsfluid,
- mindestens eine Entspannungseinrichtung (4) für Arbeitsfluid,
- mindestens zwei Wärmeübertrager (3, 5) für Arbeitsfluid mit jeweils mindestens zwei Anschlüssen und Leitungen für Sole als Wärmeüberträgerfluide (9, 10, 12, 13),
- ein Gebäude (8) mit zwei Anschlüssen und Leitungen für Sole als Wärmeüberträgerfluid (9, 10),
- ein geschlossenes Gehäuse (6),
- welches alle am geschlossenen Arbeitsfluidumlauf (1) angeschlossenen Einrichtungen umfasst und weitere Einrichtungen umfassen kann,
- und das dergestalt geschlossen ist, dass weder Tiere noch Fremdkörper eindringen, noch Unbefugte es einfach öffnen können,
- ferner schallgedämmt, aber nicht gasdicht ist und eine kleine Ausflussöffnung im unteren Bereich aufweist,
**dadurch gekennzeichnet, dass**
- das Gehäuse (6) außerhalb des Gebäudes (8) aufgestellt ist,
- die zwei Leitungen (9, 10) für Sole als Wärmeübertragerfluide vom Gehäuse (6) über einen Freiraum in das Gebäude (8) geführt werden,
- dass zwei Leitungen (12, 13) für Sole als Wärmeübertragerfluide aus dem Gehäuse (6) oberhalb des Erdbodens (7) aus dem Gehäuse (6) zur Wärmequelle (14, 16) geführt werden.
- ein doppelwandiger Kondensator (3) vorgesehen wird, dessen Leckagespalt mit einem Entgaser (18) verbunden ist, und
- die Entlüftung des Entgasers (18) in das Gehäuse (6) erfolgt.

2. Vorrichtung nach Anspruch 1, **dadurch gekennzeichnet, dass** als Wärmequelle ein Solekreislauf (14) mit unterirdisch verlegten Leitungen angeschlossen ist.

3. Vorrichtung nach Anspruch 1, **dadurch gekennzeichnet, dass** als Wärmequelle ein Solekreislauf (14) mit oberirdisch verlegten Leitungen angeschlossen ist.

4. Vorrichtung nach Anspruch 1, **dadurch gekennzeichnet, dass** als Wärmequelle ein Wasserkreislauf mit Grundwassernutzung (16) und einem Zwischenwärmetauscher (17) angeschlossen ist.

5. Vorrichtung nach einem der Ansprüche 1 bis 4, **dadurch gekennzeichnet, dass** das Gehäuse (6) aufgeständert ist.

6. Vorrichtung nach einem der Ansprüche 1 bis 5, **dadurch gekennzeichnet, dass** der Entgaser (18) zusätzlich in einer Leitung (9), die zum Gebäude (8) mit dem Wärmeträgeranschluss führt, vorgesehen wird.

## Claims

1. Device for safely performing an anti-clockwise thermodynamic Clausius-Rankine cycle (1) with R290 as the working fluid, which is conducted in a closed, hermetically sealed working fluid circuit, having
- at least one compressor (2) for working fluid,
- at least one expansion device (4) for working fluid,
- at least two heat exchangers (3, 5) for working fluid, each having at least two connections and lines for brine as heat transfer fluids (9, 10, 12, 13),
- a structure (8) with two connections and lines for brine as heat transfer fluids (9, 10),
- a closed housing (6),
- which comprises all the apparatuses connected to the closed working fluid circuit (1) and may comprise further apparatuses,
- and which is closed such that neither animals nor foreign bodies can enter it, and unauthorised persons cannot easily open it,
- is further soundproof, but not gas-tight and has a small discharge opening in the lower area,
**characterised in that**
- the housing (6) is positioned outside the structure (8),
- the two lines (9, 10) for brine as heat exchanger fluids are routed from the housing (6) via a space into the structure (8),
- **in that** two lines (12, 13) for brine as heat exchanger fluids are routed out of the housing (6) above the ground (7) from the housing (6) to the heat source (14, 16).
- a double-walled condenser (3) is provided, the leakage gap of which is connected to a degasser (18), and
- the degasser (18) is ventilated inside the housing (6).

2. Device according to claim 1, **characterised in that** a brine circuit (14) with lines laid underground is connected as the heat source.

3. Device according to claim 1, **characterised in that** a brine circuit (14) with lines laid above ground is connected as the heat source.

4. Device according to claim 1, **characterised in that** a water circuit with the use of groundwater (16) and an intermediate heat exchanger (17) is connected as the heat source.

5. Device according to any one of claims 1 to 4, **characterised in that** the housing (6) is elevated.

6. Device according to any one of claims 1 to 5, **characterised in that** the degasser (18) is also provided in a line (9), which leads to the housing (8) with the heat transfer connection.

## Revendications

1. Dispositif destiné à la réalisation d'un processus à cycle de Clausius et Rankine thermodynamique (1) qui est exploité avec le R290 en tant que fluide de travail, lequel est mené dans une circulation de fluide de travail femée et hermétiquement étanche, présentant
- au moins un compresseur (2) pour un fluide de travail,
- au moins un équipement de détente (4) pour un fluide de travail,
- au moins deux échangeurs de chaleur (3, 5) pour un fluide de travail avec respectivement au moins deux raccords et des conduites pour de l'eau saline en tant que fluide d'échangeur de chaleur (9, 10, 12, 13),
- un bâtiment (8) avec deux raccords et conduites pour de l'eau saline en tant que fluide d'échangeur de chaleur (9, 10),
- un boîtier fermé (6),
- qui comprend tous les équipements raccordés au niveau de la circulation de fluide de travail (1) fermée et qui peut comprendre d'autres équipements,
- et qui est fermé de telle sorte que ni des animaux ni des corps étrangers ne peuvent y pénéter et des personnes non autorisées ne peuvent tout simplement pas l'ouvrir,
- est en outre insonorisé mais pas étanche aux gaz et présente une petite ouverture d'écoulement dans la zone inférieure,
**caractérisé en ce que**
- le boîtier (6) est placé à l'extérieur du bâtiment (8),
- les deux conduites (9, 10) pour de l'eau saline en tant que fluides d'échangeur de chaleur sont menées via un espace libre du boîtier (6) au bâtiment (8),
- **en ce que** deux conduites (12, 13) pour de l'eau saline en tant que fluides d'échangeur de chaleur à partir du boîtier (6) au-dessus du sol (7) sont menées du boîtier (6) à la source de chaleur (14, 16),
- un condensateur à double paroi (3) est prévu, dont la fente de fuite est reliée à un désaérateur (18), et
- la purge du désaérateur (18) a lieu dans le boîtier (6).

2. Dispositif selon la revendication 1, **caractérisé en ce qu'un** circuit d'eau saline (14) en tant que source de chaleur est raccordé à des conduites enterrées.

3. Dispositif selon la revendication 1, **caractérisé en ce qu'un** circuit d'eau saline (14) en tant que source de chaleur est raccordé à des conduites aériennes.

4. Dispositif selon la revendication 1, **caractérisé en ce qu'un** circuit hydraulique en tant que source de chaleur est raccordé à une nappe phréatique (16) et à un échangeur de chaleur intermédiaire (17).

5. Dispositif selon l'une quelconque des revendications 1 à 4, **caractérisé en ce que** le boîtier (6) est monté en élévation.

6. Dispositif selon l'une quelconque des revendications 1 à 5, **caractérisé en ce que** le désaérateur (18) est en outre prévu dans une conduite (9) qui mène au bâtiment (8) avec le raccord d'échangeur de chaleur.
